# EUROPÄISCHE PATENTSCHRIFT

(11) **EP 3 769 895 B1**
(45) Veröffentlichungstag und Bekanntmachung des Hinweises auf die Patenterteilung: **31.01.2024**
(21) Anmeldenummer: 19187481.7
(22) Anmeldetag: 22.07.2019
(51) Int. Cl.: B23K 20/12

(54) **VORRICHTUNG UND VERFAHREN ZUM REIBPUNKTSCHWEISSEN**
DEVICE AND METHOD FOR FRICTION SPOT WELDING
DISPOSITIF ET PROCÉDÉ DE SOUDAGE PAR FRICTION

(43) Veröffentlichungstag der Anmeldung: 27.01.2021
(73) Patentinhaber: Harms & Wende GmbH & Co. KG, 21079 Hamburg (DE)
(72) Erfinder: Luidhardt, Fritz, 20355 Hamburg (DE); Bui, Nguon-Nhan, 21073 Hamburg (DE)
(74) Vertreter: Glawe, Delfs, Moll

(56) Entgegenhaltungen:
- EP-A1- 2 516 097
- DE-A1-102013 022 055
- US-A- 4 583 257

## Beschreibung

Die Erfindung betrifft eine Vorrichtung und ein Verfahren zum Reibpunktschweißen. Die Vorrichtung umfasst einen Stempel, eine koaxial innerhalb des Stempels angeordnete Hülse und einen koaxial innerhalb der Hülse angeordneten Stift. Ein Drehantrieb ist dazu ausgelegt, eine Drehbewegung der Hülse und/oder des Stifts relativ zu dem Stempel anzutreiben. Ein Linearantrieb ist dazu ausgelegt, eine Linearbewegung der Hülse und/oder des Stifts relativ zu dem Stempel anzutreiben.

Das Reibpunktschweißen kann genutzt werden, um aufeinander liegende Bleche, insbesondere Bleche aus Aluminium-Materialien, miteinander zu verbinden. Ein distales Ende eines Schweißwerkzeugs kann an das oberste Blech herangeführt werden, so dass mit dem Stempel ein Druck in Axialrichtung auf das oberste Blech ausgeübt wird. Die Hülse kann eine Drehbewegung durchführen, mit der das Material des Blechs in einen teigigen Zustand versetzt wird, so dass das Material unter dem axialen Druck der Hülse verdrängt werden kann. Ein Raum zur Aufnahme des verdrängten Materials kann dadurch bereitgestellt werden, dass der Stift parallel zu der Vorwärts-Bewegung der Hülse zurückgezogen wird. Die Vorwärts-Bewegung der Hülse erstreckt sich bis in das unterste zur verbindenden Blech. Ist bis in ausreichende Tiefe in das Material der Bleche eingewirkt worden, kann die Hülse zurückgezogen werden und der Stift gleichzeitig nach vorne geführt werden, so dass das teigig durchmischte Material der beiden Bleche den Verbindungsbereich gleichmäßig ausfüllt. Nach dem Aushärten des Materials ergibt sich eine punktförmige Verbindung zwischen den beiden Blechen.

Während des Schweißvorgangs kommt es zu einer Relativbewegung zwischen der Hülse und dem Stift. Durch Eindringen von teigigem Material der Bleche zwischen der Hülse und dem Stift kann die Standzeit der Vorrichtung beeinträchtigt werden.

Dokument EP 2 516 097 A1, welches die Basis für die Präambel der unabhängigen Ansprüche 1 und 11 darstellt, behandelt ein Reibpunktschweißwerkzeug, wobei das Reibpunktschweißwerkzeug mit Kanälen und Hohlräumen für Kühlung von Stift, Hülse und Stempel mit einer Kühlflüssigkeit versehen ist, wobei die Kühlflüssigkeit zumindest den Stift und die Hülse direkt umspült, wobei maschinenseitige und werkstückseitige Dichtungseinrichtungen vorgesehen sind, durch die das Austreten der Kühlflüssigkeit zwischen Stift, Hülse und Stempel zumindest stark behindert wird.

Der Erfindung liegt die Aufgabe zugrunde, eine Vorrichtung und ein Verfahren zum Reibpunktschweißen mit verbesserter Standzeit vorzustellen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei der erfindungsgemäßen Vorrichtung sind zwischen der Hülse und dem Stift ein erster Dichtspalt und ein zweiter Dichtspalt eingeschlossen. Zwischen dem ersten Dichtspalt und dem zweiten Dichtspalt ist ein erster Aufnahmeraum angeordnet.

Die Erfindung geht davon aus, dass ein Dichtspalt zwischen der Hülse und dem Stift nicht so gestaltet werden kann, dass ein Eindringen des teigigen Materials in den Zwischenraum zwischen der Hülse und dem Stift vollständig vermieden wird. Der Gedanke der Erfindung ist, ein Durchtreten des teigigen Materials durch den ersten Dichtspalt zuzulassen, aber das Material in einem ersten Aufnahmeraum zu sammeln, der zwischen dem ersten Dichtspalt und einem zweiten Dichtspalt angeordnet ist. Aus dem ersten Aufnahmeraum kann das Material in regelmäßigen Abständen entfernt werden, indem der Stift und die Hülse in axialer Richtung soweit relativ zueinander bewegt werden, dass der erste Aufnahmeraum von außen zugänglich wird. Die Vorrichtung kann sich zwischen einem proximalen Ende und einem distalen Ende erstrecken. Das proximale Ende der Vorrichtung kann an einem Rahmen aufgehängt sein. Der Drehantrieb und/oder der Linearantrieb können dazu ausgelegt sein, eine Bewegung der Hülse und/oder des Stifts relativ zu dem Rahmen anzutreiben. Der Stempel kann in einer festen räumlichen Beziehung zu dem Rahmen stehen. Die erfindungsgemäße Vorrichtung kann ein Element einer Werkzeugmaschine sein, wobei die Werkzeugmaschine eine Antriebsvorrichtung umfasst, um den Rahmen der Schweißvorrichtung so zu bewegen, dass ein distales Ende des Stempels auf einer Oberfläche der zu verbindenden Bleche aufliegt. Die Schweißvorrichtung kann einen Gegenhalter umfassen, wobei der Gegenhalter eine Auflagefläche aufweist, die einem distalen Ende des Stempels gegenüberliegt. Ein distales Ende des Stempels kann als Stirnfläche ausgebildet sein, die dazu ausgelegt ist, auf die Oberfläche der Bleche aufgelegt zu werden. Die Stirnfläche kann einen rechten Winkel einschließen mit einer Axialrichtung, die sich zwischen dem proximalen Ende und dem distalen Ende des Stempels erstreckt. Die Achse der Drehbewegung der Hülse und/oder des Stifts kann sich parallel zu dieser Axialrichtung erstrecken. Die Linearbewegung der Hülse und/oder des Stifts kann parallel zu der Axialrichtung ausgerichtet sein. Die Vorrichtung kann einen ersten Linearantrieb und einen zweiten Linearantrieb umfassen, so dass die Hülse und der Stift in Axialrichtung unabhängig voneinander bewegt werden können. Der Linearantrieb ist erfindungsgemäß so eingerichtet, dass die Hülse und der Stift soweit relativ zueinander bewegt werden können, dass der erste Aufnahmeraum von außen zugänglich wird.

Der erste Dichtspalt kann an einem distalen Ende der Vorrichtung angeordnet sein. Der zweite Dichtspalt kann vom ersten Dichtspalt aus betrachtet in proximaler Richtung angeordnet sein, so dass der erste Dichtspalt und der zweite Dichtspalt in axialer Richtung aufeinander folgen. Der Dichtspalt kann sich in Umfangsrichtung über den Außenumfang des Stifts sowie über den Innenumfang der Hülse erstrecken. Der radiale Abstand zwischen der den Dichtspalt begrenzenden Innenfläche der Hülse und der den Dichtspalt begrenzenden Außenfläche des Stifts ist so klein, dass ein Eindringen von teigigem Material in den

Dichtspalt so weit wie möglich vermieden wird. Vorzugsweise ist insbesondere bei dem ersten Dichtspalt der radiale Abstand so klein, wie es technisch möglich ist. Der radiale Abstand bei dem zweiten Dichtspalt kann mit dem radialen Abstand beim ersten Dichtspalt übereinstimmen. Bei dem zweiten Dichtspalt kann gegebenenfalls ein etwas größerer radialer Abstand in Kauf genommen werden, da die Anforderungen an die Dichtwirkung geringer als beim ersten Dichtspalt.

Im Bereich des zwischen dem ersten Dichtspalt und dem zweiten Dichtspalt eingeschlossenen ersten Aufnahmeraums ist der radiale Abstand zwischen dem Außenumfang des Stifts und dem Innenumfang der Hülse größer als bei den Dichtspalten, so dass ein für die Aufnahme des durch den ersten Dichtspalt eindringenden Materials geeigneter Raum entsteht. Im Unterschied zu dem ersten Dichtspalt ist das Material im Bereich des zweiten Dichtspalts keinem Druck ausgesetzt, so dass es nicht zu einem weiteren Vordringen des Materials in das Innere der Vorrichtung kommt.

Die Hülse kann in dem axialen Bereich der Dichtabschnitte eine zylindrisch geformte Innenfläche haben. Die Strukturen, durch die der erste Dichtspalt, der zweite Dichtspalt und der erste Aufnahmeraum gebildet werden, können am Außenumfang des Stifts angeordnet sein. Der Stift kann für den ersten Dichtspalt einen ersten Dichtvorsprung aufweisen, der relativ zu dem ersten Aufnahmeraum in radialer Richtung nach außen vorspringt. Für den zweiten Dichtspalt kann ein entsprechender zweiter Dichtvorsprung vorgesehen sein. Das distale Ende des ersten Dichtvorsprungs kann am distalen Ende des Stifts angeordnet sein. Insbesondere kann der Stift so gestaltet sein, dass der erste Dichtvorsprung Teil einer einheitlichen Stirnfläche des Stifts ist. Die Stirnfläche kann eben sein und einen rechten Winkel mit der Axialrichtung einschließen.

Möglich ist auch eine umgekehrte Gestaltung, bei der der Stift in dem axialen Bereich der Dichtabschnitte eine zylindrisch geformte Außenfläche hat und die Strukturen, durch die der erste Dichtspalt, der zweite Dichtspalt und der erste Aufnahmeraum gebildet werden, am Innenumfang der Hülse angeordnet sind.

Im Betrieb der Vorrichtung entsteht Reibungswärme. Aus dem distalen Abschnitt des Stifts, der sowohl von der Hülse als auch von dem Stempel umgeben ist, kann die Wärme nicht ganz einfach abgeführt werden. Um zu verhindern, dass die Vorrichtung sich in diesem Bereich übermäßig erwärmt, ist es von Vorteil, wenn die axiale Ausdehnung des ersten Dichtspalts klein ist. Dadurch entsteht eine im Verhältnis zur Länge des ersten Dichtspalts große Oberfläche, über die die Wärme abgeführt werden kann.

Die Länge des ersten Dichtspalts in Axialrichtung kann kleiner sein als der Außendurchmesser des Stifts im Bereich des ersten Dichtspalts. Insbesondere kann die Länge des ersten Dichtspalts kleiner sein als 80 %, vorzugsweise kleiner sein als 40 %, weiter vorzugsweise kleiner sein als 20 % der Durchmesser des ersten Dichtspalts. Die Länge des ersten Dichtspalts kann beispielsweise zwischen 0,2 mm und 4 mm, vorzugsweise zwischen 0,5 mm und 2 mm liegen.

Der zweite Dichtspalt, der in einem Abstand zu dem distalen Ende der Vorrichtung angeordnet ist, ist weniger durch Reibungswärme belastet als der erste Dichtspalt. Es kann von Vorteil sein, wenn die Länge des zweiten Dichtspalts in Axialrichtung größer ist als die Länge des ersten Dichtspalts. Beispielsweise kann die Länge des zweiten Dichtspalts um 50 % größer sein, vorzugsweise um 100 % größer sein als die Länge des ersten Dichtspalts.

Die axiale Länge des ersten Aufnahmeraums kann größer sein, beispielsweise um einen Faktor zwei, vorzugsweise um einen Faktor vier größer sein als die axiale Länge des ersten Dichtspalts. Von der Länge des ersten Aufnahmeraums hängt es ab, wie weit der Stift und die Hülse in Axialrichtung relativ zueinander bewegt werden müssen, damit der erste Aufnahmeraum frei von außen zugänglich wird, weswegen es von Vorteil ist, wenn die axiale Länge des erste Aufnahmeraums nicht zu groß ist. Die Vorrichtung kann beispielsweise so gestaltet sein, dass die Länge des ersten Aufnahmeraums um nicht mehr als den Faktor 50, vorzugsweise um nicht mehr als den Faktor 20, weiter vorzugsweise nicht mehr als den Faktor 10 größer ist als die axiale Länge des ersten Dichtspalts. Beispielsweise kann die axiale Länge des ersten Aufnahmeraums zwischen 2 mm und 50 mm, vorzugsweise zwischen 4 mm und 20 mm liegen. Der axiale Abstand zwischen der Außenwand des Stifts und der Innenwand der Hülse im Bereich des ersten Aufnahmeraums kann beispielsweise zwischen 0,1 mm und 1 mm, vorzugsweise zwischen 0,2 mm und 0,5 mm liegen.

Die erfindungsgemäße Vorrichtung kann so gestaltet sein, dass der Stempel mit der Hülse in einem distal angeordneten Dichtabschnitt einen dritten Dichtspalt einschließt. In einem zu dem dritten Dichtabschnitt benachbarten Aufnahmeabschnitt kann der Stempel mit der Hülse einen zweiten Aufnahmeraum einschließen. Der Stempel kann eine radiale Durchgangsöffnung aufweisen, die in Axialrichtung mit dem dritten Dichtabschnitt und mit dem Aufnahmeabschnitt überlappt.

Auf diese Weise kann das in den dritten Dichtspalt zwischen dem Stempel und der Hülse eindringende teigige Material so geführt werden, dass es den Betrieb der Schweißvorrichtung nicht beeinträchtigt. Durch die radiale Durchgangsöffnung in dem Stempel kann das distale Ende der Vorrichtung gekühlt werden, so dass das teigige Material kurz nach dem Eindringen in den dritten Dichtspalt aushärtet. Indem die Durchgangsöffnung mit dem dritten Dichtabschnitt überlappt, kann das Aushärten des teigigen Materials unter dem gleichzeitigen Einfluss einer Scherbewegung zwischen dem Stempel und der Hülse stattfinden, so dass das Material beim Aushärten in kleine Partikel zerlegt wird. Die kleinen Partikel können leicht durch die Durchgangsöffnung ausgetragen werden, so dass sie den weiteren Betrieb der Vorrichtung nicht beeinträchtigen.

Die Vorrichtung kann einen Luftkanal umfassen, wobei die Durchgangsöffnung einen Abschnitt des Luftkanals bildet. Der zwischen dem Stempel und der Hülse eingeschlossene zweite Aufnahmeraum kann einen weiteren Abschnitt des Luftkanals bilden. Der Luftkanal kann so gestaltet sein, dass bezogen auf die Richtung des Luftstroms die Durchgangsöffnung hinter dem zweiten Aufnahmeraum angeordnet ist. Ein von dem zweiten Aufnahmeraum kommender Luftstrom kann bis zum distalen Ende des Stempels im Bereich des Dichtabschnitts vordringen und dort zur Kühlung des eindringenden teigigen Materials beitragen. Sobald das Material ausgehärtet ist und sich die geeignete Partikelgröße eingestellt hat, kann das Material zusammen mit dem Luftstrom durch die Durchgangsöffnung austreten.

Der Luftkanal kann eine Einlassöffnung aufweisen, die an einem proximalen Ende des zweiten Aufnahmeraums mündet. An die Einlassöffnung kann eine geeignete Einrichtung angeschlossen sein, wie beispielsweise ein Gebläse oder ein Druckluftspeicher, mit dem der Luftstrom entlang dem Luftkanal in Bewegung versetzt werden kann. Es kann eine Kühleinrichtung vorgesehen sein, um den Luftstrom zu kühlen. Beispielsweise kann der Luftstrom beim Eintritt in die Vorrichtung eine Temperatur zwischen 25°C und -15°C haben. Der Druck, mit dem die Luft in den Luftkanal eingebracht wird, kann beispielsweise um 2 bar bis 8 bar höher sein als Atmosphärendruck.

Die Kühlung der Vorrichtung kann weiter verbessert werden, wenn der Stempel mit ein oder mehreren Kühlbohrungen versehen ist, die sich in Axialrichtung innerhalb der Wand des Stempels erstrecken. Zur Kühlung des Stempels kann eine Kühlflüssigkeit durch die Kühlbohrungen hindurchgeleitet werden. Die Kühlflüssigkeit kann beispielsweise am proximalen Ende des Stempels in die Bohrungen eingeleitet werden und sich in Richtung des distalen Endes bewegen.

Die Relativbewegung zwischen dem Stempel, der Hülse und/oder dem Stift kann mit einem Schmierstoff geschmiert sein. Als Schmierstoff kommen beispielsweise Öle, Fette, Wachse, Emulsionen in Betracht. Dafür ist es von Vorteil, wenn die Kühlung der Vorrichtung so eingerichtet ist, dass die Temperatur der mit dem Schmierstoff in Berührung kommenden Komponenten innerhalb des für den Schmierstoff geeigneten Temperaturbereichs liegt, also insbesondere unterhalb der Verkokungstemperatur von Öl, wenn Öl als Schmierstoff verwendet wird.

Für die Kühlwirkung ist es weiter von Vorteil, wenn das jeweilige Kühlmedium bis nahe an das distale Ende der Vorrichtung herangeführt werden kann. Der Abstand zwischen dem distalen Ende des Stempels und dem nächstliegenden Abschnitt des Kühlkanals kann beispielsweise kleiner sein als 20 %, vorzugsweise kleiner sein als 10 % der Länge des Kühlkanals in dem Stempel. Zusätzlich oder alternativ dazu kann die axiale Länge des Dichtabschnitts zwischen dem Stempel und der Hülse kleiner sein als der Außendurchmesser der Hülse, insbesondere kleiner sein als der Außendurchmesser des Stifts. Insbesondere kann die Länge des Dichtabschnitts in Axialrichtung kleiner sein als 80 %, vorzugsweise kleiner sein als 60 %, weiter vorzugsweise kleiner sein als 40 % des Außendurchmessers der Hülse. Der Außendurchmesser der Hülse kann beispielsweise zwischen 5 mm und 15 mm, vorzugsweise zwischen 7 mm und 12 mm liegen. Die axiale Länge des Dichtabschnitts kann beispielsweise zwischen 1 mm und 5 mm, vorzugsweise zwischen 2 mm und 3 mm liegen. Die axiale Länge des Dichtabschnitts wird in einem Bereich gemessen, in dem es keine Überschneidung mit der Durchgangsöffnung gibt. Die Überlappung mit der Durchgangsöffnung kann sich über wenigstens 10 %, vorzugsweise wenigstens 20 %, weiter vorzugsweise wenigstens 30 % der axialen Länge des dritten Dichtspalts erstrecken.

Der zweite Aufnahmeraum zwischen dem Stempel und der Hülse kann die Form eines Ringraums haben, der sich über den Umfang der Hülse erstreckt. Ein Luftstrom, der durch den zweiten Aufnahmeraum geführt wird, kann dann als Kühlluftstrom wirken, mit dem die Innenfläche des Stempels und die Außenfläche der Hülse über ihren gesamten Umfang gekühlt werden. Für eine gleichmäßige Verteilung des Luftstroms über den Umfang der Vorrichtung kann es von Vorteil sein, wenn der Stempel eine Mehrzahl von Durchgangsöffnungen hat. Mehrere oder alle der Durchgangsöffnungen können die genannten Merkmale der Durchgangsöffnung aufweisen, also insbesondere so angeordnet sein, dass sie in Axialrichtung sowohl mit dem Dichtabschnitt als auch mit dem Aufnahmeabschnitt überlappen. Die Durchgangsöffnungen können verteilt über den Umfang des Stempels, insbesondere gleichverteilt über den Umfang des Stempels angeordnet sein. Die Anzahl der Durchgangsöffnungen kann beispielsweise zwischen 2 und 8, vorzugsweise zwischen 3 und 6 liegen.

Die Hülse der erfindungsgemäßen Vorrichtung kann eine zylinderförmige Außenwand aufweisen. Die Zylinderwand kann sich ausgehend von einer am distalen Ende angeordneten Stirnfläche in Richtung des proximalen Ende des erstrecken. Die Länge der Zylinderfläche in Axialrichtung kann so bemessen sein, dass über den gesamten linearen Verfahrbereich der Hülse, ein Abschnitt der Zylinderfläche dem Dichtabschnitt des Stempels gegenüberliegt. Damit wird erreicht, dass die Geometrie des dritten Dichtspalts unabhängig von der axialen Position der Hülse ist. Wenn die Durchgangsöffnung in Axialrichtung mit dem Dichtabschnitt überlappt, so gibt es einen ersten Querschnittsbereich der Durchgangsöffnung, in dem das Ende der Durchgangsöffnung unmittelbar der Zylinderfläche der Hülse gegenüberliegt. In einem zweiten Querschnittsbereich der Durchgangsöffnung ist der zweite Aufnahmeraum zwischen dem Ende der Durchgangsöffnung und der Zylinderfläche eingeschlossen. Bei einer radialen Durchgangsöffnung erstreckt die Durchgangsöffnung sich zwischen einem in der Außenwand angeordneten Ende der Öffnung und einem in der Innenwand des Stempels angeordneten Öffnung.

Der zweite Aufnahmeraum kann durch eine erste zylinderförmige Innenwand des Stempels begrenzt sein. Der dritte Dichtspalt kann durch eine zweite zylinderförmige Innenwand des Stempels begrenzt sein. Die zweite zylinderförmige Innenwand kann einen kleineren Durchmesser haben als die erste zylinderförmige Innenwand. Der Übergangsbereich zwischen der ersten zylinderförmigen Innenwand und der zweiten zylinderförmigen Innenwand kann als abgerundete Kontur gestaltet sein. Die abgerundete Kontur kann über den Umfang des Stempels konstant sein. Durch die abgerundete Kontur können Ecken und Kanten vermieden werden, in denen eingedrungenes Material sich festsetzen könnte. Die erfindungsgemäße Durchgangsöffnung kann sich über den Übergangsbereich hinweg erstrecken.

Der Stift kann an seinem distalen Ende eine Stirnfläche aufweisen, die mit der Axialrichtung einen rechten Winkel einschließen kann. Die Vorrichtung kann einen Ausgangszustand umfassen, in dem die Stirnfläche des Stifts bündig mit der Stirnfläche der Hülse abschließt und in dem die Stirnfläche der Hülse bündig mit der Stirnfläche des Stempels abschließt. In diesem Ausgangszustand kann das distale Ende der Vorrichtung zu Beginn des Schweißvorgangs auf die zu bearbeitenden Bleche aufgelegt werden.

Der Schweißvorgang kann so durchgeführt werden, dass der Stempel während des gesamten Schweißvorgangs eine axiale Position beibehält. Die Hülse und/oder der Stift können zu Beginn des Schweißvorgangs relativ zu dem Stempel in Rotation versetzt werden. Die Hülse und der Stempel können mit gleicher Drehgeschwindigkeit oder unabhängig voneinander in Rotation versetzt werden. Wenn das Material der Bleche beginnt, in einen teigigen Zustand überzugehen, kann die Hülse nach vorne gefahren werden, so dass sie in das Material der Bleche eindringt. Parallel dazu kann der Stift zurückgezogen werden, so dass ein Raum zur Aufnahme des verdrängten Materials der Bleche geboten wird. Wenn die Hülse bis zum untersten der zu verbindenden Bleche vorgestoßen ist, kann die Linearbewegung umgekehrt werden, so dass die Hülse zurückgezogen wird und der Stift parallel dazu nach vorne geführt wird. Der Schweißvorgang kann damit enden, dass die Hülse und der Stift wieder die gleiche axiale Position einnehmen wie im Ausgangszustand.

Zur Verbesserung der Stabilität der Schweißverbindung kann es wünschenswert sein, den Schweißpunkt im Übergangsbereich zwischen dem Stempel und der Hülse aufzudicken. Die Stirnfläche des Stempels kann zu diesem Zweck eine zu der Hülse benachbarte Ausnehmung aufweisen, die gegenüber der Stirnfläche leicht zurückversetzt ist. Zusätzlich oder alternativ dazu kann die Stirnfläche der Hülse eine zu dem Stempel benachbarte Ausnehmung aufweisen, die gegenüber der Stirnfläche der Hülse zurückversetzt ist. Die Ausnehmungen können einen ringförmigen Raum definieren, in dem das Material zur Aufdickung des Schweißpunkts aufgenommen wird. Ist die Stirnfläche der Hülse nicht mit einer solchen Ausnehmung versehen, so kann eine Aufdickung des Schweißpunkts erreicht werden, indem die Hülse am Ende des Schweißvorgangs etwas über den Ausgangszustand hinaus zurückgezogen wird. Ein Stempel für eine Schweißvorrichtung, in dessen Stirnfläche eine Ausnehmung in einem radial inneren Abschnitt der Stirnfläche ausgebildet ist, hat eigenständigen erfinderischen Gehalt unabhängig davon, ob der Stempel in einer erfindungsgemäßen Schweißvorrichtung verwendet wird. Der Stempel kann mit weiteren Merkmalen fortgebildet werden, die im Zusammenhang der erfindungsgemäßen Schweißvorrichtung beschrieben sind.

Die Vorrichtung kann eine Steuereinheit umfassen, die dazu ausgelegt ist, die Komponenten der Vorrichtung so anzusteuern, dass ein Teil der Schritte oder alle Schritte des Schweißvorgangs automatisch durchgeführt werden. Die Steuereinheit kann dazu ausgelegt sein, die Vorrichtung in geeigneter Weise relativ zu den zu verbindenden Blechen zu positionieren, den Drehantrieb anzusteuern und/oder den Linearantrieb anzusteuern.

Die Steuereinheit kann so ausgelegt sein, dass sie nach der Durchführung einer Mehrzahl von Schweißvorgängen ein Reinigungsprogramm durchläuft. Das Reinigungsprogramm kann einen oder mehrere der folgenden Schritte umfassen: Verfahren der Vorrichtung in eine Reinigungsstellung; Ausführen einer axialen Bewegung zwischen dem Stift und der Hülse, so dass der erste Aufnahmeraum zugänglich wird; Entfernen von eingedrungenem Material von dem ersten Aufnahmeraum; Durchführen einer axialen Bewegung zwischen dem Stift und der Hülse, so dass der erste Aufnahmeraum innerhalb der Vorrichtung angeordnet ist.

Um den ersten Aufnahmeraum von außen zugänglich zu machen, kann der Stift relativ zu der Hülse wenigstens soweit verfahren werden, bis der zweite Dichtspalt mit der Stirnfläche des benachbarten Elements überlappt. Das axiale Verfahren, mit dem der erste Aufnahmeraum zugänglich gemacht wird, kann insbesondere darin bestehen, dass der Stift relativ zu der Hülse nach vorne gefahren wird.

Das eingedrungene Material kann dadurch aus dem ersten Aufnahmeraum entfernt werden, dass mit einem Luftstrom auf den ersten Aufnahmeraum eingewirkt wird. Auch alternative Reinigungsschritte sind möglich, beispielsweise durch Bürsten oder durch Einwirken einer Flüssigkeit.

Die Erfindung betrifft außerdem eine mit einer solchen Schweißvorrichtung ausgestattete Werkzeugmaschine.

Die Erfindung betrifft auch ein System aus einer solchen Schweißvorrichtung und einer Reinigungsstation. Die Reinigungsstation kann eine Reinigungskammer umfassen, in die ein distales Ende der Vorrichtung zum Durchführen der Reinigung eingeführt wird. Die Reinigungsstation kann so ausgelegt sein, dass dort der Reinigungsschritt durchgeführt wird, also beispielsweise mit einem Luftstrom, einer Flüssigkeit und/oder einer Bürste auf das Material in der Reinigung eingewirkt wird. Insbesondere kann die Reinigungsstation in die Reinigungskammer gerichtete Luftdüsen umfassen.

Die Erfindung betrifft ferner ein Verfahren zum Reibpunktschweißen. Bei dem Verfahren wird eine Mehrzahl von Schweißvorgängen durchgeführt, indem ein Stift und/oder eine Hülse, die koaxial innerhalb eines Stempels angeordnet sind, relativ zu dem Stempel in Drehung versetzt werden. Nach der Mehrzahl von Schweißvorgängen werden der Stift und die Hülse in Axialrichtung relativ zueinander verfahren, so dass ein zwischen einem ersten Dichtspalt und einem zweiten Dichtspalt angeordneter erster Aufnahmeraum von außen zugänglich wird. In den ersten Aufnahmeraum eingedrungenes Material wird mit einem Reinigungsschritt entfernt. Der Stift und die Hülse werden in Axialrichtung relativ zueinander verfahren, so dass der erste Aufnahmeraum im Inneren der Vorrichtung angeordnet ist.

Anschließend kann erneut eine Mehrzahl von Schweißvorgängen durchgeführt werden. An die Mehrzahl von Schweißvorgängen kann sich erneut ein Reinigungsschritt anschließen.

Das Verfahren kann mit weiteren Merkmalen fortgebildet werden, die im Zusammenhang der erfindungsgemäßen Vorrichtung beschrieben sind. Die Vorrichtung kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Werkzeugmaschine;
- Fig. 2:: eine schematische Darstellung eines Schweißvorgangs;
- Fig. 3:: ein Element der Werkzeugmaschine aus Fig. 1 in vergrößerter Darstellung;
- Fig. 4:: ein Detail aus Fig. 3 in vergrößerter Darstellung;
- Fig. 5:: ein Detail der Werkzeugmaschine aus Fig. 1 bei einer alternativen Ausführungsform der Erfindung;
- Fig. 6:: die Ansicht gemäß Fig. 5 bei einer alternativen Ausführungsform der Erfindung;
- Fig. 7:: eine alternative Ausführungsform eines erfindungsgemäßen Schweißwerkzeugs;
- Fig. 8:: eine erfindungsgemäße Schweißvorrichtung im Reinigungszustand;
- Fig. 9:: eine Schnittdarstellung einer erfindungsgemäßen Reinigungsstation.

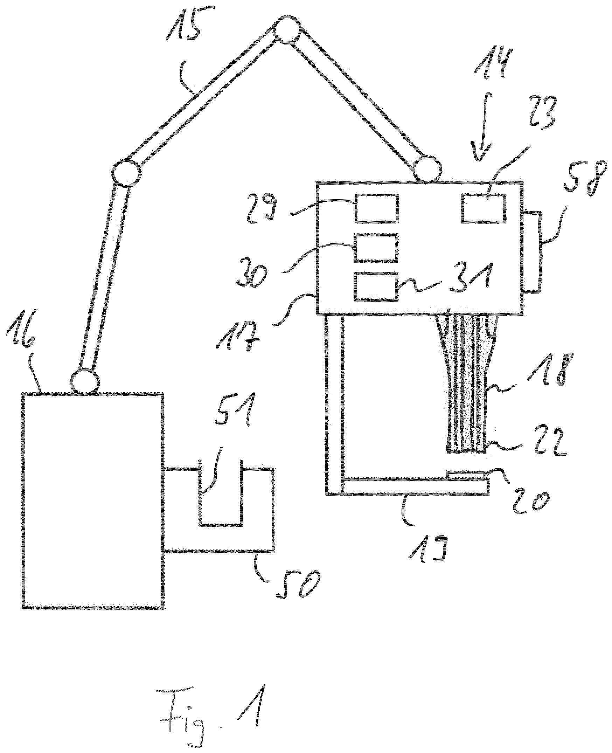

Die Fig. 1 zeigt eine Werkzeugmaschine, bei der eine Schweißvorrichtung 14 über einen Roboterarm 15 an einer Tragestruktur 16 aufgehängt ist. Mit dem Roboterarm 15 kann die Schweißvorrichtung 14 relativ zu der Tragestruktur 16 bewegt werden.

Die Schweißvorrichtung 14 umfasst einen Rahmen 17, an dem ein Schweißwerkzeug 18 und ein Gegenhalter 19 befestigt sind. Eine Auflagefläche 20 des Gegenhalters liegt einem distalen Ende 22 des Schweißwerkzeugs 18 gegenüber. Um zwei Aluminium-Bleche (nicht dargestellt) miteinander zu verbinden, wird die Schweißvorrichtung 14 über den Roboterarm 15 so bewegt, dass das Schweißwerkzeug 18 und der Gegenhalter 19 die beiden Aluminium-Bleche zwischen sich einschließen. Mit einem Antrieb 23 wird das Schweißwerkzeug 18 an den Gegenhalter 19 angenähert, so dass das distale Ende 22 des Schweißwerkzeugs und die Auflagefläche 20 des Gegenhalters von gegenüberliegenden Seiten Druck auf die Aluminium-Bleche ausüben und die Aluminium-Bleche zwischen dem Schweißwerkzeug 18 und dem Gegenhalter 19 eingeklemmt sind. Eine Steuereinheit 58 steuert das Zusammenspiel der Komponenten der Werkzeugmaschine.

Die Werkzeugmaschine umfasst eine Reinigungsstation 50 mit einer Reinigungskammer 51. Das distale Ende 22 des Schweißwerkzeugs 18 kann in die Reinigungskammer 51 eingeführt werden, um das Schweißwerkzeug 18 nach dem Durchführen von mehreren Schweißvorgängen zu reinigen. Der Reinigungsvorgang wird unten näher erläutert.

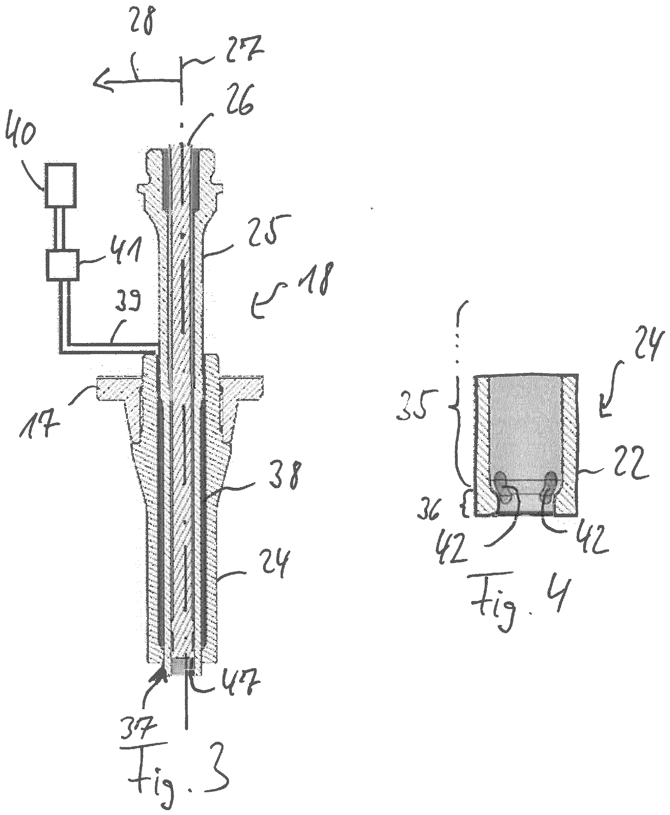

Gemäß der vergrößerten Darstellung in Fig. 3 umfasst das Schweißwerkzeug 18 einen Stempel 24, eine Hülse 25 und einen Stift 26, die koaxial zu einer Achse 27 angeordnet sind. Die Achse 27 definiert die Axialrichtung der Schweißvorrichtung 14. Die Radialrichtung 28 schließt mit der Axialrichtung 27 einen rechten Winkel ein.

Der Stempel 24 steht in einer starren Verbindung mit dem Rahmen 17 der Schweißvorrichtung 14. Die Hülse 25 ist in Axialrichtung verschiebbar und um die Achse 27 drehbar relativ zu dem Stempel 24 gelagert. Der Stift 26 ist in Axialrichtung 27 verschiebbar relativ zu der Hülse 25 gelagert. Die Schweißvorrichtung 14 umfasst einen Drehantrieb 29, mit dem die Hülse 25 und der Stift 26 in eine gemeinsame Drehbewegung relativ zu dem Stempel 24 versetzt werden können. Ein erster Linearantrieb 30 ist dazu ausgelegt, eine lineare Bewegung in Axialrichtung 27 zwischen der Hülse 25 und dem Stempel 24 anzutreiben. Ein zweiter Linearantrieb 31 ist dazu ausgelegt, eine Linearbewegung in Axialrichtung 27 zwischen dem Stift 26 und der Hülse 25 anzutreiben.

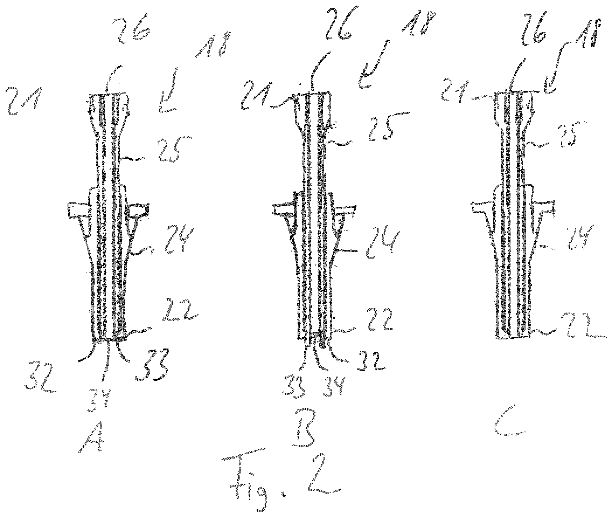

Der Ablauf eines Schweißvorgangs wird anhand von Fig. 2 erläutert. Zu Beginn des Schweißvorgangs, wenn das Schweißwerkzeug 18 und der Gegenhalter 19 an die Aluminium-Bleche herangeführt sind und auf den Aluminium-Blechen aufliegen (Fig. 2A), ist das Schweißwerkzeug 18 in einem Ausgangszustand, in dem eine Stirnfläche 32 des Stempels 24, eine Stirnfläche 33 der Hülse 25 sowie eine Stirnfläche 34 des Stifts 26 am distalen Ende 22 des Schweißwerkzeugs 18 bündig miteinander abschließen und in einer gemeinsamen Ebene liegen. Die Stirnflächen 32, 33, 34 liegen auf der Oberfläche eines der zu verbindenden Aluminium-Bleche auf.

Die Hülse 25 und der Stift 26 werden mit dem Drehantrieb 29 in Drehung versetzt, so dass das Aluminium-Material unter der Reibung der Stirnflächen 33, 34 in einen teigigen Zustand übergeht. Parallel zu der Drehbewegung wird die Hülse 25 mit dem ersten Linearantrieb 30 nach vorne gefahren, so dass das distale Ende der Hülse 25 in das Blech eindringt und dabei Aluminium-Material verdrängt. Ein Raum zur Aufnahme des verdrängten Aluminium-Materials wird geschaffen, indem gleichzeitig der Stift 26 mit dem zweiten Linearantrieb 31 zurückgezogen wird.

Die Hülse 25 dringt so weit in das Material der Bleche ein, bis sie zu dem untersten der zu verbindenden Bleche vordringt. Unter Beibehaltung der Drehbewegung wird die Linearbewegung dann umgekehrt, so dass die Hülse 25 zurückgezogen wird und der Stift 26 nach vorne bewegt wird. Der Zustand des Schweißwerkzeugs 18, in dem die Hülse 25 am weitesten ausgefahren ist und der Stift 26 am weitesten zurückgezogen ist, ist in Fig. 2B dargestellt. Nachdem die Hülse 25 und der Stift 46 bis in die Ausgangsposition zurückgefahren sind (Fig. 2C), wird die Drehbewegung zu einem Halt gebracht, und das Schweißwerkzeug 18 sowie der Gegenhalter 19 werden von der Oberfläche der Bleche entfernt. Das während des Schweißvorgangs in den teigigen Zustand versetzte Aluminium-Material der Bleche bildet eine punktförmige Schweißverbindung zwischen den beteiligten Blechen.

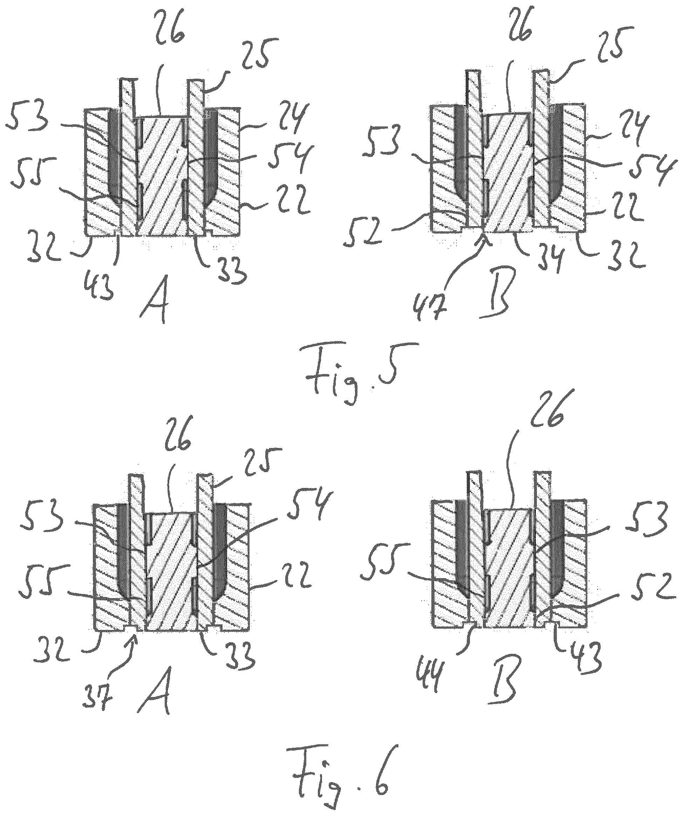

Die Hülse 25 hat gemäß Fig. 3 im distalen Abschnitt eine zylinderförmige Innenfläche, die sich um den Stift 26 herum erstreckt. Die Außenfläche des Stifts 26 ist gemäß der vergrößerten Darstellung in den Fig. 5 und 6 mit einem ersten Dichtvorsprung 52 und einem zweiten Dichtvorsprung 53 versehen. Der Innendurchmesser der Hülse 25 ist so bemessen, dass er zu dem Außenumfang der Dichtvorsprünge 52, 53 passt. Die Hülse 25 liegt mit einem minimalen radialen Abstand an dem Außenumfang der Dichtvorsprünge 52, 53 an, so dass die Hülse 25 mit dem ersten Dichtvorsprung 52 einen ersten Dichtspalt 47 bildet und mit dem zweiten Dichtvorsprung 53 einen zweiten Dichtspalt 54 bildet. Mit anderen Worten ist der erste Dichtspalt 47 so bemessen, dass möglichst wenig des teigigen Aluminium-Materials eindringen kann. Zwischen dem ersten Dichtvorsprung 52 und dem zweiten Dichtvorsprung 53 sowie in proximaler Richtung von dem zweiten Dichtvorsprung 53 hat der Stift 26 einen kleineren Außendurchmesser, so dass zwischen der Hülse 25 und dem Stift 26 ein ringförmiger Raum eingeschlossen ist. Der ringförmige Raum zwischen dem ersten Dichtvorsprung 52 und dem zweiten Dichtvorsprung 53 bildet einen ersten Aufnahmeraum 55 im Sinne der Erfindung.

Der Stempel 24 umfasst gemäß der vergrößerten Darstellung in Fig. 4 einen Aufnahmeabschnitt 35 und einen Dichtabschnitt 36. In dem Aufnahmeabschnitt 35 hat der Stempel 24 einen größeren Innendurchmesser als in dem Dichtabschnitt 36. Der Innendurchmesser des Dichtabschnitts 36 ist so bemessen, dass er zum Außenumfang der Hülse 25 passt. Der Stempel 24 liegt in dem Dichtabschnitt also mit einem minimalen radialen Abstand an dem Außenumfang der Hülse 25 an. Mit anderen Worten ist zwischen der Hülse 25 und dem Dichtabschnitt 36 des Stempels 24 ein dritter Dichtspalt 37 eingeschlossen, der so bemessen ist, dass möglichst wenig des teigigen Aluminium-Materials eindringen kann.

In dem Aufnahmeabschnitt 35 ist zwischen der Innenwand des Stempels 24 und der Außenwand der Hülse 25 ein ringförmiger Raum eingeschlossen, der einen zweiten Aufnahmeraum 38 im Sinne der Erfindung bildet. Der zweite Aufnahmeraum 38 entspricht zugleich einem Abschnitt eines Luftkanals 39, der sich von einem Gebläse 40 über eine Kühleinrichtung 41 zu dem zweiten Aufnahmeraum 38 erstreckt.

Nahe seinem distalen Ende 22 ist der Stempel 24 mit Durchgangsöffnungen 42 versehen, die sich in Radialrichtung 28 durch die Wand des Stempels 24 hindurch erstreckt. Die Durchgangsöffnungen 42 bilden einen Auslass des Luftkanals 39. Über den Umfang des Stempels 24 sind insgesamt vier Durchgangsöffnungen 42 gleichmäßig verteilt, von denen zwei Durchgangsöffnungen 42 in Fig. 4 zu sehen sind.

Bezogen auf die Axialrichtung 27 überlappen die Durchgangsöffnungen 42 sowohl mit dem Dichtabschnitt 36 als auch mit dem Aufnahmeabschnitt 35 des Stempels 24. Insbesondere erstrecken die Durchgangsöffnungen 42 sich über die abgerundete Kontur hinweg, durch die der Aufnahmeabschnitt 35 und der Dichtabschnitt 36 miteinander verbunden sind.

Der dritte Dichtspalt 37 zwischen dem Stempel 24 und der Hülse 24 kann nicht so gestaltet werden, dass ein Eindringen des teigigen Aluminium-Materials vollständig vermieden wird. Der Luftstrom in dem Kühlkanal 39 trägt dazu bei, durch den dritten Dichtspalt 37 eindringende Teile des Aluminium-Materials zu einem schnellen Abkühlen zu bringen. Durch die Überlappung zwischen den Durchgangsöffnungen 42 und dem Dichtabschnitt 36 des Stempels 24 kann der Luftstrom unmittelbar im Bereich des dritten Dichtspalts 37 auf das Aluminium-Material wirken. Durch die gleichzeitige Scherbewegung, die sich aus der Drehung der Hülse 25 relativ zu dem Stempel 24 ergibt, wird das Aluminium-Material beim Abkühlen in kleine Partikel zerteilt. Die Partikel treten zusammen mit dem Luftstrom durch die Durchgangsöffnungen 42 aus dem Schweißwerkzeug 18 aus. Indem der Luftstrom das Schweißwerkzeug 18 bis zum distalen Ende 22 kühlen kann und zugleich das in kleine Partikel unterteilte Aluminium-Material aus dem Schweißwerkzeug 18 abgeführt wird, wird die Standzeit des Schweißwerkzeugs 18 erhöht.

Auch der erste Dichtspalt 47 zwischen der böse 25 und dem ersten Dichtvorsprung 52 des Stifts 26 kann nicht so gestaltet werden, dass ein Eindringen des teigigen Aluminium-Materials vollständig vermieden wird. Das eingedrungene Aluminiummaterial sammelt sich in dem ersten Aufnahmeraum 55 und wird durch den zweiten Dichtvorsprung 53 daran gehindert, weiter in den Innenraum der Schweißvorrichtung 18 vorzudringen. Anders als bei dem zweiten Aufnahmeraum 38 zwischen dem Stempel 24 und der Hülse 25 ist bei dem ersten Aufnahmeraum 55 nicht vorgesehen, das eingedrungene Aluminium-Material im normalen Betrieb der Schweißvorrichtung 18 nach außen abzuführen. Vielmehr wird das Aluminium-Material über eine Mehrzahl von Schweißvorgängen in dem ersten Aufnahmeraum 55 gesammelt. Zum Entfernen des Aluminium-Materials wird das Schweißen unterbrochen und die Schweißvorrichtung 18 wird einem Reinigungsvorgang unterzogen.

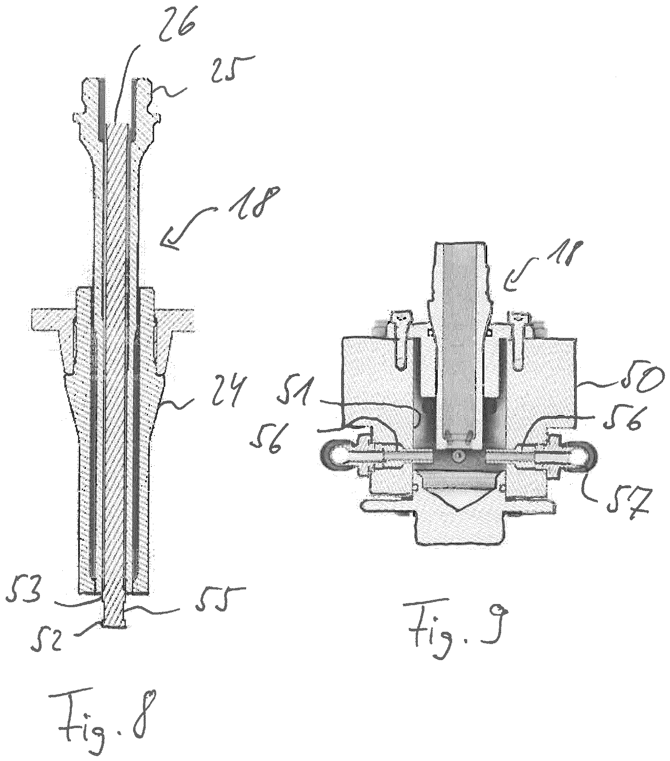

Für den Reinigungsvorgang wird der Stift 26 relativ zu der Hülse 25 in distaler Richtung bewegt, bis der zweite Dichtvorsprung 53 mit dem distalen Ende der Hülse 25 überlappt, so dass der erste Aufnahmeraum 55 von außen zugänglich wird. In Fig. 8 ist die Schweißvorrichtung 18 im Reinigungszustand gezeigt, in der der erste Aufnahmeraum 55 von außen zugänglich ist.

Das Entfernen des Aluminium-Materials erfolgt in der Reinigungsstation 50. Der Gegenhalter 19 wird zur Seite geschwenkt, so dass das distale Ende der Schweißvorrichtung 18 in die Reinigungskammer 51 eingeführt werden kann. Dieser Zustand ist in Fig. 9 gezeigt, wobei die Schweißvorrichtung 18 nur schematisch angedeutet ist.

Die Reinigungsstation 50 umfasst vier radial nach innen weisende Düsen 56, die gleichmäßig über den Umfang der Reinigungsstation 50 verteilt sind. Die Düsen 56 sind an einen Luftschlauch 57 angeschlossen, mit dem ein in die Reinigungskammer 51 gerichteter Luftstrom erzeugt werden kann. Die Düsen 56 sind so angeordnet, dass der Luftstrom auf den von außen zugänglichen ersten Aufnahmeraum 55 gerichtet ist. Das in dem ersten Aufnahmeraum 55 angesammelte wird in dem Luftstrom aufgenommen und abgeführt. Der von Verunreinigungen befreite erste Aufnahmeraum 55 wird in die Hülse 25 zurückgezogen, so dass die Schweißvorrichtung 18 für eine Mehrzahl von weiteren Schweißvorgängen bereit ist.

In Fig. 5 ist das distale Ende 22 des Schweißwerkzeugs 18 bei einer alternativen Ausführungsform der Erfindung gezeigt. Die Stirnfläche 32 des Stempels 24 ist mit einer Ausnehmung 43 versehen, die an den dritten Dichtspalt 37 angrenzt und die sich über den Umfang des Schweißwerkzeugs 18 erstreckt. Zu Beginn des Schweißvorgangs liegen die Stirnflächen 32, 33, 34 des Stempels 24, der Hülse 25 und des Stifts 26 wie in Fig. 5A gezeigt auf dem Aluminium-Blech auf. Am Ende des Schweißvorgangs (Fig. 5B) wird die Hülse 25 etwas weiter zurückgezogen, so dass die Stirnfläche 33 der Hülse 25 zusammen mit der Ausnehmung 43 des Stempels 24 einen ringförmigen Raum zur Aufnahme des Aluminium-Materials bildet. Das Aluminium-Blech wird über den Umfang des Schweißpunkts leicht aufgedickt, wodurch die Stabilität der Schweißverbindung erhöht wird.

Eine alternative Möglichkeit, die Stabilität der Schweißverbindung durch einer Aufdickung zu erhöhen, ist in Fig. 6 gezeigt. Die Hülse 25 ist mit einer zu der Ausnehmung 43 des Stempels 24 benachbarten ringförmigen Ausnehmung 44 versehen. Die Ausnehmungen 43, 44 bilden gemeinsam einen ringförmigen Raum zur Aufnahme des Aluminium-Materials. Die Hülse 25 wird am Ende des Schweißvorgangs nur soweit zurückgezogen, bis die Stirnflächen 32, 33, 34 des Stempels 24, der Hülse 25 und des Stifts 26 in einer Ebene liegen.

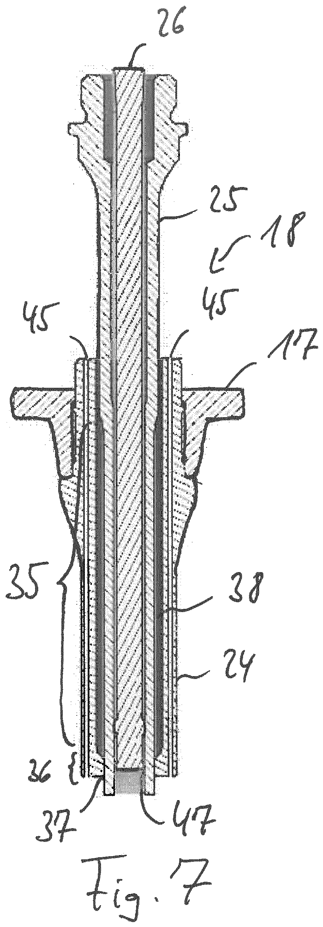

Bei der alternativen Ausführungsform gemäß Fig. 7 ist der Stempel 24 des Schweißwerkzeugs 18 mit einer Mehrzahl von Kühlbohrungen 45 versehen, die sich in Axialrichtung 27 innerhalb der Wand des Stempels 24 erstrecken. Zur Kühlung des Schweißwerkzeugs 18 kann eine Kühlflüssigkeit durch die Kühlbohrungen 45 geleitet werden.

## Patentansprüche

1. Vorrichtung zum Reibpunktschweißen, mit einem Stempel (24), einer koaxial innerhalb des Stempels (24) angeordneten Hülse (25) und einem koaxial innerhalb der Hülse (25) angeordneten Stift (26), mit einem Drehantrieb (29), um eine Drehbewegung der Hülse (25) und/oder des Stifts (26) relativ zu dem Stempel (24) anzutreiben, und mit einem Linearantrieb (30, 31), um eine Linearbewegung der Hülse (25) und/oder des Stifts (26) relativ zu dem Stempel (24) anzutreiben, wobei zwischen der Hülse (25) und dem Stift (26) ein erster Dichtspalt (47) und ein zweiter Dichtspalt (54) eingeschlossen sind und wobei zwischen dem ersten Dichtspalt (47) und dem zweiten Dichtspalt (54) ein erster Aufnahmeraum (55) angeordnet ist, **dadurch gekennzeichnet, dass** der Linearantrieb (30, 31) so eingerichtet ist, dass die Hülse (25) und der Stift (26) soweit zueinander bewegt werden können, dass der erste Aufnahmeraum (55) von außen zugänglich wird.

2. Vorrichtung nach Anspruch 1, **dadurch gekennzeichnet, dass** der erste Dichtspalt (47) an einem distalen Ende (22) der Vorrichtung angeordnet ist und dass der zweite Dichtspalt (54) vom ersten Dichtspalt (47) aus betrachtet in proximaler Richtung angeordnet ist.

3. Vorrichtung nach Anspruch 1 oder 2, **gekennzeichnet durch** einen an dem Stift (26) angeordneten ersten Dichtvorsprung (52) für den ersten Dichtspalt (47) und einen an dem Stift (26) angeordneten zweiten Dichtvorsprung (53) für den zweiten Dichtspalt (54).

4. Vorrichtung nach einem der Ansprüche 1 bis 3, **dadurch gekennzeichnet, dass** die Länge des ersten Dichtspalts (47) in Axialrichtung (27) kleiner ist als der Außendurchmesser des Stifts (26) im Bereich des ersten Dichtspalts (47).

5. Vorrichtung nach Anspruch 4, **dadurch gekennzeichnet, dass** die Länge des zweiten Dichtspalts (54) in Axialrichtung (27) größer ist als die Länge des ersten Dichtspalts (47) in Axialrichtung.

6. Vorrichtung nach Anspruch 4 oder 5, **dadurch gekennzeichnet, dass** die Länge des ersten Aufnahmeraums (55) in Axialrichtung (27) größer ist als die Länge des ersten Dichtspalts (47) in Axialrichtung.

7. Vorrichtung nach einem der Ansprüche 1 bis 6, **dadurch gekennzeichnet, dass** in einem distal angeordneten Dichtabschnitt (36) der Stempel (24) mit der Hülse (25) einen dritten Dichtspalt (37) einschließt, wobei in einem zu dem dritten Dichtabschnitt (36) benachbarten Aufnahmeabschnitt (35) der Stempel (24) mit der Hülse (25) einen Aufnahmeraum (38) einschließt und wobei der Stempel (24) eine radiale Durchgangsöffnung (42) umfasst, die in Axialrichtung (27) mit dem Dichtabschnitt (36) und mit dem Aufnahmeabschnitt (35) überlappt.

8. Vorrichtung nach einem der Ansprüche 1 bis 7, **gekennzeichnet durch** eine Steuereinheit (58), die dazu ausgelegt ist, die Hülse (25) und den Stift (26) relativ zueinander in axialer Richtung zu bewegen, so dass erste Aufnahmeraum (55) zugänglich wird.

9. System aus einer Vorrichtung nach einem der Ansprüche 1 bis 8 und einer Reinigungsstation (50), wobei die Reinigungsstation (50) eine zur Aufnahme des distalen Endes (22) der Vorrichtung bestimmte Reinigungskammer (51) umfasst.

10. System nach Anspruch 9, **dadurch gekennzeichnet, dass** die Reinigungsstation (50) in die Reinigungskammer (51) gerichtete Luftdüsen (56) umfasst.

11. Verfahren zum Reibpunktschweißen, bei dem eine Mehrzahl von Schweißvorgängen durchgeführt wird, indem ein Stift (26) und/oder eine Hülse (25), die koaxial innerhalb eines Stempels (24) angeordnet sind, relativ zu dem Stempel (24) in Drehung versetzt werden, **dadurch gekennzeichnet, dass** nach der Mehrzahl von Schweißvorgängen werden der Stift (26) und die Hülse (25) in Axialrichtung (27) relativ zueinander verfahren werden, so dass ein zwischen einem ersten Dichtspalt (47) und einem zweiten Dichtspalt (54) angeordneter erster Aufnahmeraum (55) von außen zugänglich wird, und dass in den Aufnahmeraum (55) eingedrungenes Material entfernt wird.

12. Verfahren nach Anspruch 11, **dadurch gekennzeichnet, dass** nach dem Entfernen des Materials der Stift (26) und die Hülse (25) in Axialrichtung relativ zueinander verfahren werden, so dass der Aufnahmeraum (55) im Inneren der Vorrichtung angeordnet ist.

13. Verfahren nach Anspruch 11 oder 12, **dadurch gekennzeichnet, dass** mit einem Luftstrom auf den ersten Aufnahmeraum (55) eingewirkt wird, um das Material zu entfernen.

## Claims

1. Friction spot welding device, comprising a punch (24), a sleeve (25) arranged coaxially inside the punch (24), and a pin (26) arranged coaxially inside the sleeve (25), having a rotary drive (29), in order to drive a rotational movement of the sleeve (25) and/or of the pin (26) relative to the punch (24), and having a linear drive (30, 31), in order to drive a linear movement of the sleeve (25) and/or of the pin (26) relative to the punch (24), wherein a first sealing gap (47) and a second sealing gap (54) are formed between the sleeve (25) and the pin (26) and wherein a first receiving space (55) is arranged between the first sealing gap (47) and the second sealing gap (54), **characterized in that** the linear drive (30, 31) is configured such that the sleeve (25) and the pin (26) can be moved in relation to one another to the extent that the first receiving space (55) becomes accessible from the outside.

2. Device according to Claim 1, **characterized in that** the first sealing gap (47) is arranged at a distal end (22) of the device, and **in that** the second sealing gap (54) is arranged proximally as viewed from the first sealing gap (47).

3. Device according to Claim 1 or 2, **characterized by** a first sealing projection (52), arranged on the pin (26), for the first sealing gap (47) and a second sealing projection (53), arranged on the pin (26), for the second sealing gap (54).

4. Device according to one of Claims 1 to 3, **characterized in that** the length of the first sealing gap (47) in the axial direction (27) is smaller than the outside diameter of the pin (26) in the region of the first sealing gap (47).

5. Device according to Claim 4, **characterized in that** the length of the second sealing gap (54) in the axial direction (27) is greater than the length of the first sealing gap (47) in the axial direction.

6. Device according to Claim 4 or 5, **characterized in that** the length of the first receiving space (55) in the axial direction (27) is greater than the length of the first sealing gap (47) in the axial direction.

7. Device according to one of Claims 1 to 6, **characterized in that** the punch (24) forms a third sealing gap (37) with the sleeve (25) in a distal sealing portion (36), wherein the punch (24) forms a receiving space (38) with the sleeve (25) in a receiving portion (35) adjacent to the third sealing portion (36), and wherein the punch (24) comprises a radial through-opening (42) which overlaps the sealing portion (36) and the receiving portion (35) in the axial direction (27).

8. Device according to one of Claims 1 to 7, **characterized by** a control unit (58), which is designed to move the sleeve (25) and the pin (26) relative to one another in the axial direction, with the result that the first receiving space (55) becomes accessible.

9. System composed of a device according to one of Claims 1 to 8 and a cleaning station (50), wherein the cleaning station (50) comprises a cleaning chamber (51) intended for receiving the distal end (22) of the device.

10. System according to Claim 9, **characterized in that** the cleaning station (50) comprises air nozzles (56) directed into the cleaning chamber (51).

11. Friction spot welding method, in which a plurality of welding operations are carried out by rotating a pin (26) and/or a sleeve (25), which are arranged coaxially inside a punch (24), relative to the punch (24), **characterized in that**, after the plurality of welding operations, the pin (26) and the sleeve (25) are moved relative to one another in the axial direction (27), with the result that a first receiving space (55) arranged between a first sealing gap (47) and a second sealing gap (54) becomes accessible from the outside, and that material that has entered the receiving space (55) is removed.

12. Method according to Claim 11, **characterized in that**, after the material has been removed, the pin (26) and the sleeve (25) are moved relative to one another in the axial direction, with the result that the receiving space (55) is arranged inside the device.

13. Method according to Claim 11 or 12, **characterized in that** an air stream is made to act on the first receiving space (55) in order to remove the material.

## Revendications

1. Dispositif de soudage par points par friction, comprenant un poinçon (24), un manchon (25) disposé coaxialement à l'intérieur du poinçon (24) et une broche (26) disposée coaxialement à l'intérieur du manchon (25), un entraînement en rotation (29) destiné à entraîner le manchon (25) et/ou la broche (26) suivant un mouvement de rotation par rapport au poinçon (24), et un entraînement linéaire (30, 31) destiné à entraîner le manchon (25) et/ou la broche (26) suivant un mouvement linéaire par rapport au poinçon (24), un premier espace d'étanchéité (47) et un deuxième espace d'étanchéité (54) étant ménagés entre le manchon (25) et la broche (26) et un premier espace de réception (55) étant ménagé entre le premier espace d'étanchéité (47) et le deuxième espace d'étanchéité (54), **caractérisé en ce que** l'entraînement linéaire (30, 31) est conçu de manière que le manchon (25) et la broche (26) puissent être rapprochés jusqu'à ce que le premier espace de réception (55) soit accessible depuis l'extérieur.

2. Dispositif selon la revendication 1, **caractérisé en ce que** le premier espace d'étanchéité (47) est disposé à une extrémité distale (22) du dispositif et **en ce que** le deuxième espace d'étanchéité (54) est disposé dans la direction proximale par référence au premier espace d'étanchéité (47).

3. Dispositif selon la revendication 1 ou 2, **caractérisé par** une première saillie d'étanchéité (52) disposée sur la broche (26) et destinée au premier espace d'étanchéité (47) et une deuxième saillie d'étanchéité (53) disposée sur la broche (26) et destinée au deuxième espace d'étanchéité (54).

4. Dispositif selon l'une des revendications 1 à 3, **caractérisé en ce que** la longueur du premier espace d'étanchéité (47) dans la direction axiale (27) est inférieure au diamètre extérieur de la broche (26) dans la région du premier espace d'étanchéité (47).

5. Dispositif selon la revendication 4, **caractérisé en ce que** la longueur du deuxième espace d'étanchéité (54) dans la direction axiale (27) est supérieure à la longueur du premier espace d'étanchéité (47) dans la direction axiale.

6. Dispositif selon la revendication 4 ou 5, **caractérisé en ce que** la longueur du premier espace de réception (55) dans la direction axiale (27) est supérieure à la longueur du premier espace d'étanchéité (47) dans la direction axiale.

7. Dispositif selon l'une des revendications 1 à 6, **caractérisé en ce que**, dans une portion d'étanchéité (36) disposée de manière distale, le poinçon (24) enferme avec le manchon (25) un troisième espace d'étanchéité (37), dans une portion de réception (35) adjacente à la troisième portion d'étanchéité (36), le poinçon (24) enfermant avec le manchon (25) un espace de réception (38) et le poinçon (24) comprenant une ouverture de passage radiale (42) qui recouvre la portion d'étanchéité (36) et la portion de réception (35) dans la direction axiale (27).

8. Dispositif selon l'une des revendications 1 à 7, **caractérisé par** une unité de commande (58) qui est conçue pour déplacer le manchon (25) et la broche (26) l'un par rapport à l'autre dans la direction axiale de sorte que le premier espace de réception (55) devienne accessible.

9. Système comprenant un dispositif selon l'une des revendications 1 à 8 et une station de nettoyage (50), la station de nettoyage (50) comprenant une chambre de nettoyage (51) destinée à recevoir l'extrémité distale (22) du dispositif.

10. Système selon la revendication 9, **caractérisé en ce que** la station de nettoyage (50) comprend des buses d'air (56) dirigées dans la chambre de nettoyage (51).

11. Procédé de soudage par points par friction, dans lequel une pluralité d'opérations de soudage est effectuée par mise en rotation d'une broche (26) et/ou d'un manchon (25), qui sont disposés coaxialement à l'intérieur d'un poinçon (24), par rapport au poinçon (24), **caractérisé en ce que**, après la pluralité d'opérations de soudage, la broche (26) et le manchon (25) sont déplacés l'un par rapport à l'autre dans la direction axiale (27) de sorte qu'un premier espace de réception (55), ménagé entre un premier espace d'étanchéité (47) et un deuxième espace d'étanchéité (54), devienne accessible depuis l'extérieur, et **en ce que** la matière qui a pénétré dans l'espace de réception (55) est retirée.

12. Procédé selon la revendication 11, **caractérisé en ce que**, après avoir retiré la matière, la broche (26) et le manchon (25) sont déplacés l'un par rapport à l'autre dans la direction axiale de façon à ménager l'espace de réception (55) à l'intérieur du dispositif.

13. Procédé selon la revendication 11 ou 12, **caractérisé en ce que** le premier espace de réception (55) est soumis à un flux d'air afin de retirer la matière.
